# EUROPEAN PATENT SPECIFICATION

(11) **EP 0 451 887 B1**
(45) Date of publication and mention of the grant of the patent: **07.06.1995**
(21) Application number: 91200513.9
(22) Date of filing: 08.03.1991
(51) Int. Cl.: B60K 41/14, F16H 61/00, F16H 59/06

(54) **Electronically controlled continuously variable transmission**
Stufenlos regelbares Getriebe mit elektronischer Steuerung
Variateur continu de vitesse commandé électroniquement

(30) Priority: 12.04.1990 NL 9000860
(43) Date of publication of application: 16.10.1991
(60) Divisional application: 94200110.8
(73) Proprietor: Van Doorne's Transmissie B.V., NL-5026 RA Tilburg (NL)
(72) Inventor: Hendriks, Emery Frederik Marie, NL-5591 NR Heeze (NL); Roovers, Wilhelmus Cornelus Waltherus Maria, NL-4841 HE Prinsenbeek (NL); d'Herripon, Bastiaan Andreas, NL-5025 GD Tilburg (NL)
(74) Representative: van Westenbrugge, Andries

(56) References cited:
- EP-A- 0 095 147
- EP-A- 0 229 900
- EP-A- 0 306 216
- DE-A- 3 415 596
- DE-A- 3 939 857
- US-A- 4 593 581

## Description

The invention relates to an electronically controlled continuously variable transmission, provided with a driving belt, which is disposed between a primary pulley provided on a primary shaft, and a secondary pulley provided on a secondary shaft, whereby each pulley has corresponding conical pulley halves and at least one of said corresponding pulley halves is axially movable by means of primary and secondary moving means connected to a primary pulley half and a secondary pulley half respectively, which electronically controlled continuously variable transmission comprises an electronic control unit for adjusting the transmission ratio.

Such a controlled continuously variable transmission is known from GB-A-2.058.257. This known transmission is provided with a hydraulic system comprising two valves controlling the flow to and from hydraulic cylinders of the movable pully halves of the primary and secondary pulley, to set the transmission ratio. The two valves are electronically controlled. Further the hydraulic system is provided with an accumulator to provide a constant pressure in the hydraulic system and accordingly provide a constant tension of the belt.

The object of the invention is to provide a more efficient transmission.

For that purpose the electronically controlled continuously variable transmission according to the invention is characterized by the features set out in the second part of claim 1.

The advantage of the transmission according to the invention is that an improvement has been achieved with regard to the separation between the primary and the secondary electronic control units, the flexibility and the possibility of influencing the transmission ratio and the tension force in dependence on several parameters to be selected.

As a result the transmission according to the invention has a considerably improved efficiency and an extended life.

One embodiment of the electronic continuously variable transmission is according to the invention characterized in that the primary electronic control unit comprises selection means, in which mutually different data are stored in memories, said data relating to a certain optimum selection with regard to the operating mode of the transmission.

The advantage of this embodiment is that it is made possible for the driver of a vehicle, in which the transmission is provided, to realise the performance he requires at a certain moment by a suitable selection of one of various selection means. The options to be selected comprise e.g. the possibility of driving with mimimal fuel consumption, with an enhanced accelerating power or e.g. with maximum comfort, whereby the variations in the transmission ratio are reduced as much as possible.

In order to realise a minimal fuel consumption with a first option, whereby a minimum amount of exhaust fumes is produced, the transmission according to the invention is characterized in that a signal is supplied to an input of the first selection means, which signal contains a measure for the position of an accelerator pedal of an engine coupled to the transmission, and that on the basis of the type of engine an optimum selection for the momentaneously desired value of the rotational speed, hereinafter referred to as rpm, of the primary shaft is made from data stored in the memory, said data comprising the motor torque values associated with the relevant position of the accelerator pedal versus the values of the corresponding rpm's of the primary shaft, and that said selection is supplied to an output coupled to the primary moving means, so as to influence the transmission ratio.

In a further embodiment the transmission according to the invention is characterized in that a signal is supplied to an input of the second selection means, which signal contains a measure for the position of an accelerator pedal of an engine coupled to the transmission, whereby on the basis of the signal and on the basis of a signal supplied to an input of the second selection means, which signal contains a measure for the rpm of the secondary shaft, an optimum selection for the momentaneously desired value of the rpm of the primary shaft is made from data stored in a memory of the second selection means, said data comprising a desired connection between the values of the rpm's of the secondary shaft and the primary shaft, and that said selection is supplied to an output coupled to the primary moving means, so as to influence the transmission ratio.

The advantage of this further embodiment of the transmission according to the invention is that this second option by itself makes it possible again to differentiate as to the degree in which a sporting performance is required, by specifically establishing the required connection between the rpm's of the secondary shaft and the primary shaft. This required connection is preferably established in an electronical manner, so that it is not necessary to influence the position of the engine throttle by realising a certain shape of a cam coupled to the accelerator pedal.

Preferably the transmission according to the invention is provided with adjustable damping means, which are connected between the output of the first or the second selection means and the primary moving means.

The advantage of using adjustable damping means is that by reducing the degree of change in the signal carried to the primary moving means it is prevented that overly quick variations in the transmission ratio can occur. This prolongs the life of the transmission, since the amount of wear is reduced.

Another preferred embodiment of the transmission is according the invention characterized in that the secondary electronic control unit contain memory means, in which data are stored which comprise values, associated with the motor torque values, of the rpm of the engine in dependence on the settings of the engine throttle, that the control unit has two inputs for supplying a signal containing a measure for the actual position of the throttle to the first input and for supplying a signal containing a measure for the actual rpm to the second input, as well as processing means connected to the memory means for delivering a further signal containing a measure for the torque produced by the engine to the output of the processing means, and that the output of the processing means is coupled to the secondary moving means for controlling the tension in the driving belt on the basis of the further signal.

The advantage of this further embodiment of the transmission according to the invention is that the tension in the driving belt can be set in dependence on the estimated actual torque produced by the engine, so that said power can be transmitted by the transmission at all times, without any slip of the driving belt on the pulley halves.

Another embodiment of the transmission according to the invention is characterized in that the secondary control unit contains first correction means provided with two inputs and one output and a first arithmetic unit provided with two inputs and one output, whereby the first input of the arithmetic unit is connected to the second input of the secondary control means, the second input of the arithmetic unit is connected to a terminal (Nₚ), to which a signal is to be supplied which contains a measure for the value of the torque (Nₚ) of the primary shaft and whereby at the output of the arithmetic unit connected to the second input of the first correction means a signal is generated, which contains a measure for the quotient of (Nₚ) and (Nₘ), whereby the first input of the first correction means is connected to the output of the processing means, and whereby the output of the first correction means is coupled to the secondary moving means.

The advantage of this embodiment of the transmission according to the invention is that at the output of the first correction means a signal is generated which is corrected for any slip, being the quotient of (Nₚ) and (Nₘ), so that the slip is taken into account when the tension in the driving belt is being influenced. The accuracy of the estimate of the torque of the primary shaft has been enhanced by this measure, so that the tension force of the driving belt is adjusted accurately.

Yet another embodiment of the transmission is according to the invention characterized in that the secondary control unit contains a second and a third arithmetic unit, each unit being provided with two inputs and one output, whereby the first input of the second arithmetic unit is connected to a terminal (Nₚ), to which a signal is to be supplied which contains a measure for the value of the rpm (Nₚ) of the primary shaft, and whereby the second input of the second arithmetic unit is connected to a terminal (Nₛ), to which a signal is to be supplied which contains a measure for the value of the rpm (Nₛ) of the secondary shaft, and a signal is generated, at the output of the second arithmetic unit connected to the second input of the third arithmetic unit, which contains a measure for the transmission ratio, whereby the first input of the third arithmetic unit is coupled to the output of the first correction means, and whereby the output of the third arithmetic unit is coupled to the secondary moving means.

This embodiment of the transmission according to the invention makes it possible to render the tension force in the driving belt also dependent on the momentaneous transmission ratio. Since this leads to an average decrease of the tension force, the life of the driving belt is further prolonged.

Yet another embodiment of the transmission is according to the invention characterized in that the secondary control unit contains a fourth arithmetic unit having one input and one output, and a fifth arithmetic unit having two inputs and one output, whereby the input of the fourth arithmetic unit is connected to the output of the second arithmetic unit, so as to generate a signal at the output of the fourth arithmetic unit which contains a measure for the secondary radius (Rₛ) of the driving belt, which is movable between the secondary pulley halves, whereby the output of the fourth arithmetic unit is connected to the second input of the fifth arithmetic unit and the first input of the fifth arithmetic unit is connected is connected to the output of the third arithmetic unit, and whereby the output of the fifth arithmetic unit is coupled to the secondary moving means.

The advantage of this embodiment of the transmission according to the invention is that the estimate for the tension in the driving belt, given a factor to be incorporated in the fourth arithmetic unit, said factor depending on the concrete geometric design of the transmission, is controlled in co-dependence on the actual secondary radius of the driving belt.

Yet another embodiment of the transmission is according to the invention characterized in that the secondary control unit contains a sixth arithmetic unit having one input and one output and a seventh arithmetic unit having two inputs and one output, whereby the input of the sixth arithmetic unit is connected to the terminal (Nₛ), the output of the sixth arithmetic unit is connected to the second input of the seventh arithmetic unit and the first input of the seventh arithmetic unit is coupled to the output of the third arithmetic unit, so as to reduce, with higher rpm's of the secondary shaft, the measure in the output signal of the seventh arithmetic unit which controls the tension force in the driving belt.

The advantage of this embodiment of the transmission according to the invention is that in particular the wear of the driving belt occurring at higher rpm's, as a result of an overly high tension force, is reduced. In practice it appears namely that in particular with higher velocities of revolutions the tension force of the driving belt can be substantially reduced, as a result of which the amount of wear is further decreased.

The invention and its further advantages will be further discussed with reference to the drawing, in which:
Figure 1 is a diagrammatic illustration of an embodiment of the electronic continuously variable transmission according to the invention;
Figure 2 shows a primary electronic control unit for use in the transmission according to Figure 1;
Figure 3 shows a secondary electronic control unit for use in the transmission according to Figure 1;
Figure 4 shows a further electronic control unit for use in the transmission according to Figure 1;
Figure 5 shows a possible embodiment of electro-mechanical means for use in the transmission according to Figure 1;
Figure 6 shows a further embodiment of primary electro-mechanical means for use in the transmission according to Figure 1, said means being provided with a safety valve; and
Figure 7 shows a further embodiment of secondary electro-mechanical means for use in the transmission according to Figure 1, provided with a safety valve.

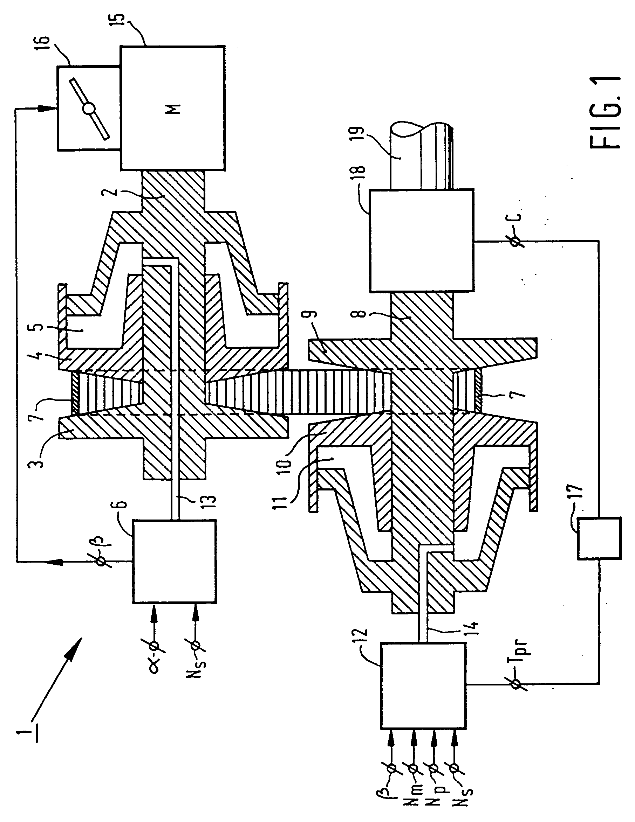

Figure 1 shows an embodiment of an electronic continuously variable transmission. The transmission 1 comprises a primary shaft 2, on which a primary pulley in the shape of primary pulley halves 3 and 4 is provided, said pulley half 3 being fixedly mounted on the primary shaft 2 and said primary pulley half 4 being movable on the shaft 2. In the illustrated embodiment of the transmission 1 the axially movable pulley 4 is movable by exerting a hydraulic pressure in a cylinder space 5. The control of the pressure in the cylinder space 5 takes place by a primary control unit 6 connected to the cylinder space 5, the function of said control unit being to adjust the radius of a driving belt 7 provided between the pulley halves 3 and 4 by controlling the pressure in the cylinder space 5.

The transmission 1 furthermore comprises a secondary shaft 8, on which a pulley having secondary pulley halves 9 and 10 is provided, said pulley half 9 being fixedly mounted on the shaft 8 and said pulley half 10 being movably provided on the shaft 8. The pulley half 10, which is axially movable on the shaft, is moved by exerting a pressure in a cylinder space 11 connected to secondary electronic control unit 12.

The control units 6 and 12 respectively are connected to the cylinder spaces 5 and 11 respectively by means of lines 13 and 14 respectively. The tension in the driving belt 7, which is furthermore provided between the secondary pulley halves 9 and 10, is maintained in that the secondary electronic control unit 12 exerts a suitable pressure in the cylinder space 11.

The transmission ratio or the tension force in the driving belt 7, as the case may be, is hydraulically influenced by the control units 6 and 12 respectively. For this purpose the control units 6 and 12 contain primary and secondary moving means to be further discussed hereafter. Said moving means do not necessarily have to be designed for influencing the transmission ratio and the tension force in a hydraulic manner, but it is conceivable that said moving means are of an electro-mechanical nature, and for that purpose comprise electro-mechanical converters, so as to enable an influencing of the transmission ratio or the tension force, as the case may be, by moving the pulley halves 4 or 10, as the case may be. The electro-mechanical primary and secondary moving means may e.g. contain a worm wheel to be rotated, by means of which worm wheel the pulley halves 4 and 10 are moved in axial direction. The hydraulic version of the primary and secondary moving means will be explained in more detail hereafter.

The transmission 1 furthermore contains a motor 15 coupled to the primary shaft 2, which motor is controlled by means of a throttle 16 coupled to an accelerator pedal (not shown), which receives an electric signal from a terminal (α), which is connected to the primary electronic control unit 6.

The transmission 1 furthermore contains further electronic control means 17, which are connected to a terminal (Tₚᵣ) of the secondary electronic control unit 12. The output signal of said further control means 17 is led, via a command input (C), to clutch means 18 coupled to the secondary shaft 8. The clutch means 18 transmit the torque eventually controlled by the transmission to the wheels (not shown) of a vehicle. The clutch or lock-up means 18 are engaged or disengaged, as the case may be, by means of a signal on the command input (C), said signal being derived, by further electronic control means 17 yet to be explained, from a signal on the terminal (Tₚᵣ), which in turn can be derived from the control unit 12.

In the illustrated embodiment the clutch or lock-up means 18 (e.g. a torque converter) are provided behind the secondary pulley, when seen in the driving direction. It will be apparent, however, that within the framework of the invention said means 18 may also be provided in another configuration or at another location in the transmission, e.g. on the primary shaft, without any problem.

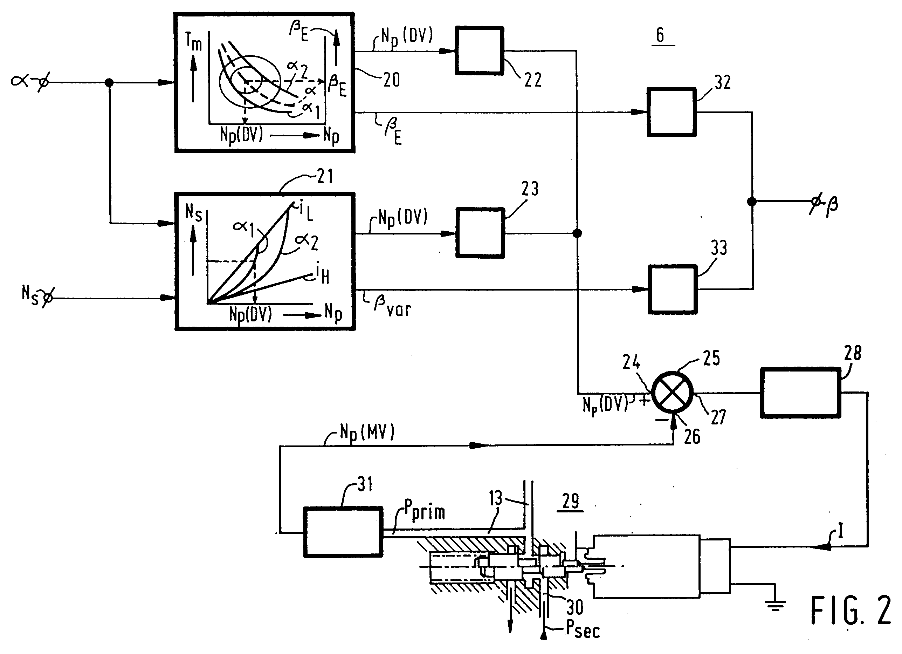

Figure 2 shows a fully elaborated preferred embodiment of the primary electronic control unit 6. The control unit 6 are connected to a terminal (α) and to a terminal (Nₛ), and contain first selection means 20 and second selection means 21, which are connected, via respective adjustable damping means 22 and 23, to the summing input 24 of a differentiator 25. Said differentiator 25 furthermore contains a differential input 26 and an output 27, which is coupled, via a PID-controller 28, to primary moving means 29. Said primary moving means 29, which are hydraulic moving means in the illustrated embodiment, have an ingoing line 30 and an outgoing line 13, in which the hydraulic pressure for the cylinder space 5 is generated. The line 13 is coupled, via a converter 31, to the differential input 26 of the differentiator 35. Besides outputs Nₚ(DV) connected to the adjustable damping means 22 and 23 the selection means 20 and 21 respectively have outputs (β_{E}) and (βᵥₐᵣ), which are interconnected via adjustable damping means 32 and 33 respectively, and which are connected to the terminal (β), which is connected to the throttle 16 containing adjusting means.

In the first and second selection means 20, 21 an output signal Nₚ(DV) is derived on the basis of the signal (α) in a manner to be further described hereafter, said output signal forming a measure for the desired value of the rpm of the primary shaft 2. Said signal is offered to the differentiator via either damping means 22 or 23, which reduces the variation in the signal it is supplied, to which differentiator a signal Nₚ(MV), i.e. the measured value of the rpm of the primary shaft 2, is supplied, also via the differential input 26, on the basis of which the difference signal is made available to the output 27 in the differentiator 25. The PID-controller 28, whose various actions can be adjusted in a suitable manner, influences the differential signal on the output 27 such that the primary moving means can be controlled by means of said signal. The primary moving means 29 are arranged such that they reduce a pressure P_{sec} prevalent in the line 13, in such a manner that in said line a pressure Pₚᵣᵢₘ is prevalent, by means of which the pressure in the cylinder space 5, and thus the transmission ratio, is adjusted. In the converter 31, to which the signal Pₚᵣᵢₘ is supplied, a signal to be supplied to the differential input 26 is converted, said signal containing a measure for the measured value Nₚ(MV), which is a measure for the primary rpm measured.

The first selection means 20 contains a memory, in which characteristics are stored which contain data comprising the motor torque values (Tₘ) associated with the relevant position (α) of the accelerator pedal versus the values (Nₚ) of the rpm's of the primary shaft. The characteristic trend of said data is schematically illustrated in block 20. For each position (α) of the accelerator pedal an area around a desired value of the primary rpm can be indicated, within which the fuel take-up of the engine is minimal. Around this area further, so-called islands can be shown in the shape of more or less concentric areas, which indicate a gradually increasing fuel consumption. Thus an optimum selection of the momentaneously required value of the rpm of the primary shaft can be made in the selection means 20, and be supplied to the primary moving means 29 via the output Nₚ(DV). If the measured value Nₚ(MV) of the rpm of the primary shaft 2 differs from the desired value Nₚ(DV) the transmission ratio (i) is changed by the primary moving means 29 in such a manner that these two values correspond with one another. The selection means 20 will furthermore contain a memory, in which data are stored comprising the connection between the values of the rpm (Nₚ) of the primary shaft 2 and the corresponding adjustments of the engine throttle. When for an economical performance the selection means 20 have been selected, the value of the throttle adjustment (β_{E}) corresponding herewith in the economical position will be determined on the basis of the optimum value Nₚ(DV). This signal (β_{E}) is supplied to the terminal via the damping means 32.

When a normal performance or a sporting performance is required, the selection means 21 are selected, which contain a memory in which data are stored which comprise a desired connection between the value (Nₛ) of the rpm of the secondary shaft 8 and the value (Nₚ), which represents the rpm of the primary shaft 2. This connection is schematically illustrated in block 21. This curvilinear, parabolic connection which lies between extreme values of the transmission ratio i, which is defined as Nₚ: Nₛ, is also dependent on the manner in which, when the rpm of the secondary shaft 2, which is generally proportional to the vehicle speed, varies, the corresponding desired value Nₚ(DV) of the rpm of the primary shaft varies in dependence on (β). The value (Nₛ) is derived from a signal present on a terminal (Nₛ), which is connected to means (not shown) for measuring the rpm of the secondary shaft, and which contains a measure for said rpm. The value of Nₚ(DV) thus selected on the basis of Nₛ is led to the control loop via the output of the selection means 21, in which circuit the primary moving means 29 are incorporated. Furthermore data will be stored in a memory of the selection means, which data represent the desired connection between Nₚ(DV) and the corresponding throttle adjustment βᵥₐᵣ. The signal which contains a measure for βᵥₐᵣ is supplied to terminal β via the damping means 33.

The manner in which the operating mode of the transmission is selected, by selecting the first selection means 20 or the second selection means 21, as the case may be, may take place either manually or in a manner whereby, when the accelerator pedal is influenced in an even manner, an automatic selection is made for the first selection means, and whereby in case of a so-called "kickdown" on the accelerator pedal the option of a normal or a sporting performance is automatically selected by the selection of the selecting means 21, The further selection of a desired normal or sporting performance, in case the selection means 21 have been selected, may e.g. be done manually.

Within the framework of this control it is also possible to influence this control in such a manner that a constant transmission ratio is set. The second selection means will thereby select such an Nₚ(DV) with each Nₛ that a constant transmission ratio is achieved. This is a desirable addition, in particular when the transmission is used in vehicles. The driver of the vehicle would thereby have an option to interfere with the control, e.g. manually, by setting a desired transmission ratio Nₑ/Nₛ which is constantly set by second selection means 21, in that case by constant selection of the value Nₚ(DV).
If required and necessary in practice the various set constants and time constants in the PID-controller 28 can be influenced by e.g. the selection of the first or the second selection means or by the degree to which a sporting performance is required. Possibly the various action in the controller 28 can be made dependent on the values of e.g. the parameters α, Nₛ, Nₚ(DV), β_{E} or βᵥₐᵣ. The controller 28 may furthermore be self-learning.

The converter 31 is arranged in such a manner that it could determine the rpm Nₚ(MV) of the primary shaft 2 on the basis of the pressure Pₚᵣᵢₘ in the line 13, which pressure is proportional to the transmission ratio, given the known value Nₛ of the rpm of the secondary shaft 8.

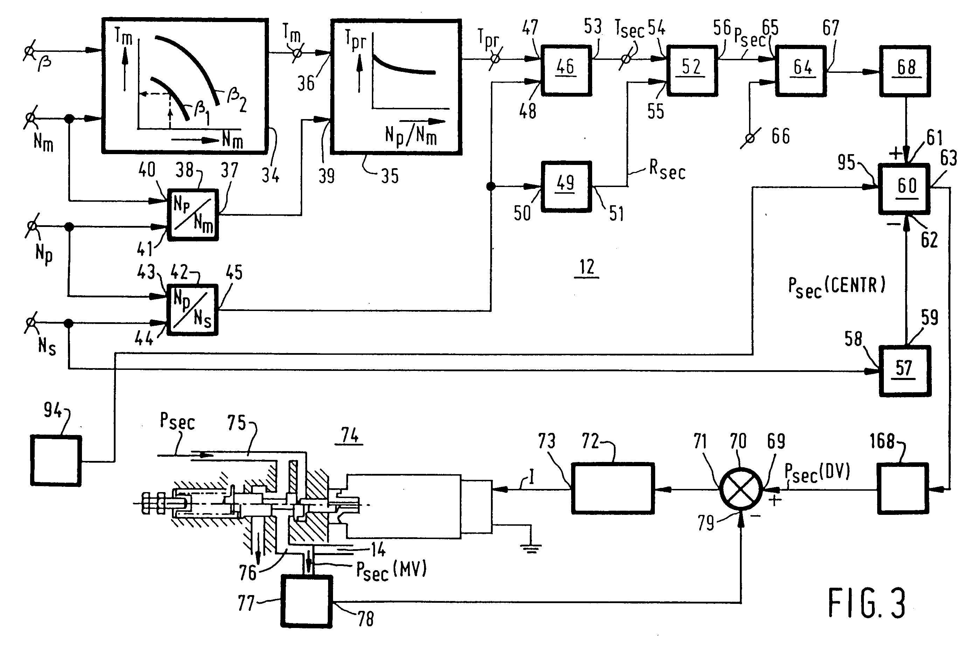

Figure 3 shows the podsible arrangement of the secondary electronic control unit 12. The control unit 12 contains memory/processing means 34 having an input connected to the terminal and an input connected to the terminal (Nₘ). Furthermore the means 34 have an output (Tₘ). The control unit 12 furthermore has first correction means 35, with a first input 36 connected to the terminal (Tₘ) and a second input 39 connected to an output 37 of a first arithmetic unit 38. Said arithmetic unit 38 has a first input 40 connected to the terminal (Nₘ) and a second input 41 connected to the terminal Nₚ. The signal on the input 39 contains a measure for the quotient of Nₚ and Nₘ. This quotient indicates any slip that occurs, when reduction means (not shown) are provided between the motor 15 and the primary shaft 2. This quotient will generally be smaller than 1. The control unit 12 furthermore contains a second arithmetic unit 42 having a first input 43 connected to the terminal (Nₚ) and a second input 44 connected to a terminal (Nₛ). The arithmetic unit has an output 45, from which a signal can be derived which contains a measure for the transmission ratio, which is defined as the quotient of Nₚ and Nₛ. A third arithmetic unit 46 has two inputs 47 and 48, the first input 47 of which is connected to the terminal Tₚᵣ and the second input 48 of which is connected to the output 45 of the second arithmetic unit 42. Furthermore the control unit 12 contains a fourth arithmetic unit 49 having an input 50 connected to the output 45 and an output 51, from which a signal can be derived which contains a measure for the radius R_{sec} of the driving belt 7 between the secondary pulley halves 9 and 10, and a fifth arithmetic unit 52 having a first input 54 connected to an output 53 of the third arithmetic unit 46 and a second input 55 connected to the output 51. From an output 56 of the fifth arithmetic unit 52 a signal can be derived, in a manner to be explained hereafter, which contains a measure for the required pressure P_{sec}, on the basis of which the tension in the driving belt 7 is controlled by adjusting the pressure in the cylinder space 11.

The illustrated embodiment furthermore contains a sixth arithmetic unit 57 incorporated in the control unit 12, which has an input 58 and an output 59, and a seventh arithmetic unit 60 having a first input 61, a second input 62, and an output 63. The input 58 is connected to the terminal (Nₛ), the second input 62 is connected to the output 59 and the first input 61 of the arithmetic unit 60 is coupled to the output 56 of the fifth arithmetic unit 52, via an arithmetic unit 64 incorporated in the control unit 12, said arithmetic unit 64 having a first input 65 connected to the output 56, a second input 66 and an output 67. Adjustable damping means 68 are provided between the output 67 and the input 61. Like the aforesaid adjustable damping means 22, 23, 32, 33 the adjustable damping means 68 contain electronic means, on the basis of which an amplitude variation in the input signal is reduced, whereby in general the reduction in a rising gradient of the input signal will be different from a reduction with regard to a decreasing gradient in the input signal in question. The output 63 of the seventh arithmetic unit may be coupled, via an adjustable limiter 168, to an input 69 of a differentiator 70. The differentiator 70 forms part of a control loop, in which there is furthermore incorporated a PID-controller 72 coupled to an output 71 of the differentiator 70, said PID-controller having an output 73 which is connected to secondary moving means 74. The moving means 74 are provided with an ingoing line 75, which is coupled to a pump (not shown) and an outgoing line 76. The pressure P_{sec}(MV) in the line 76 is controlled in dependence on the output signal on the output 73, in that the line 76 is connected to a converter 77, which contains an output 78 which is connected to a differential input 79 of the differentiator 70. The converter 77 is arranged in such a way that it effects a conversion of the hydraulic pressure in the outgoing line 76 to a signal on the output 78, which signal will generally be electrical and which is suitable for being processed by the differentiator 70. The pressure P_{sec}(MV) forms the value thus measured of the pressure in the cylinder space 11, by means of which the tension force in the driving belt 7 is controlled on the basis of the parameters α, Nₘ, Nₚ or Nₛ. Also the actions in the PID-controller 72 are adjusted such that they ensure an optimum and stable influencing of the pressure P_{sec}(MV).

The starting point in the operation of the secondary electric control unit 12 is formed by the data stored in the memory of said control means, said data comprising the values Tₘ associated with the motor torque values Nₘ of the engine rpm, in dependence on the possible settings of the engine throttle 16. On the basis of the signals and Nₘ on the terminals in question of the means 34 an estimate is made of the torque Tₘ produced by the motor, which estimate is supplied to the input 36. Block 34 diagrammatically illustrates the relevant characteristics that play a role within this context. On the basis of data stored in a memory of the first correction means 35, which data comprise the connection between the torque Tₚᵣ produced at the primary pulley of the motor, and the quotient of Nₚ and Nₘ an estimate is made of Tₚᵣ, which is supplied to the input 47. On the basis of Tₚᵣ and on the basis of the signal supplied to the second input 48, which contains a measure for the transmission ratio, the product of Tₚᵣ and i is determined in the third arithmetic unit 46, and said product is supplied to the input 54 in the shape of a signal T_{sec}. On the basis of the relation ${\text{P}}_{\text{sec}} {\text{= T}}_{\text{sec}} {\text{/(2»R}}_{\text{sec}} {\text{A}}_{\text{s}} \text{)}$ a computation is carried out in the fifth arithmetic unit 52, the result of which is supplied to the input 65 in the shape of an estimate for P_{sec}. To the second input 66 of the eighth arithmetic unit 64 a signal is supplied which corresponds with e.g. a pressure of 2 bar, which in the arithmetic unit 64 is added to the signal on the input 65 and which is then supplied to the input 61 of the arithmetic unit 60 via the adjustable damping means 68. To the second input 62 of said arithmetic unit 60 a signal P_{sec}(CENTR) is supplied which is determined by the sixth arithmetic unit 57 by means of the signal Nₛ supplied thereto, on the basis of the relation ${\text{P}}_{\text{sec}} {\text{(CENTR) = C(N}}_{\text{s}} {\text{²/1000) /A}}_{\text{s}}$ . In the preceding relations the symbols represent the following:
T_{sec} represents the torque to be supplied to the vehicle;
» is the coefficient of friction;
R_{sec} is the secondary radius of the driving belt;
Aₛ is the effective surface, with which the pressure in the secondary moving means is controlled by means of a plunger provided therein; and
C is a constant.

The arithmetic unit 60 subtracts the signal on the input 62 from the signal on the input 61, the difference being supplied to the output 63. On account of the quadratic relation with regard to Nₛ the factor P_{sec} (CENTR) will play an important role, in particular with higher secondary rpm's of the shaft 8. Eventually a desired secondary pressure P_{sec}(DV) is supplied to the differentiator 70, said pressure being a function of the parameters β, Nₘ, Nₚ and Nₛ. For safety reasons the circuit will be arranged in such a manner that when the signal on the output 73 is zero the secondary pressure will be maximal, in order that, irrespective of a possible failure in the functioning of the control means 12, the tension of the driving belt is controlled such that the functioning of the transmission 1, be it not optimal, is ensured.

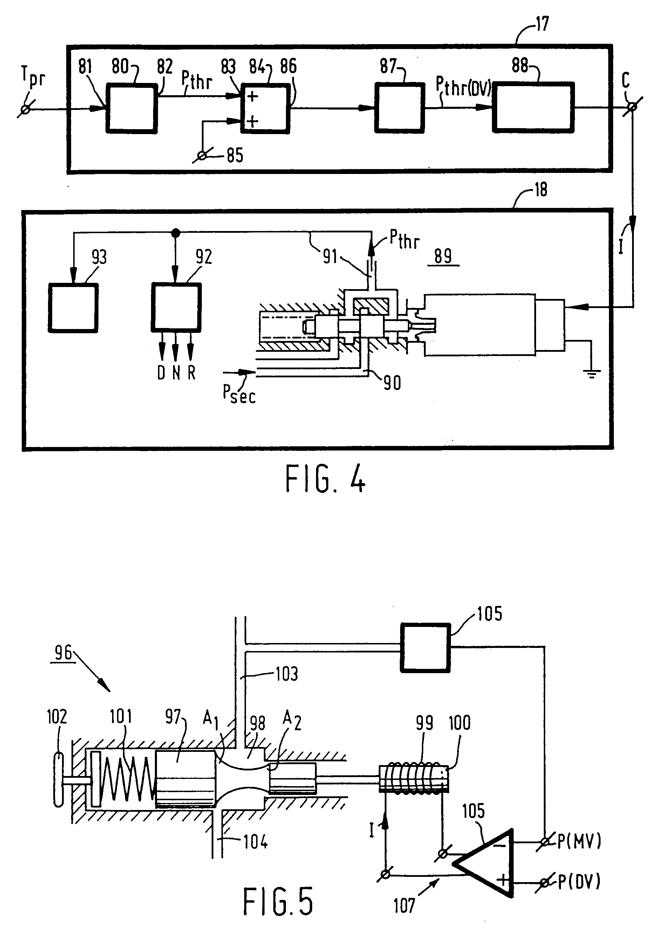

Figure 4 shows the possible arrangement of the further electronic control means 17, and a part of the clutch/lock-up means 18. The further electronic control means 17 contain a ninth arithmetic unit 80 having an input 81 connected to the terminal Tₚᵣ and an output 82. For e.g. a fluid clutch the arithmetic unit 80 computes on the basis of the relation ${\text{P}}_{\text{thr}} {\text{(slip) = T}}_{\text{pr}} \text{/(»AnR)}$ , wherein:
Pₜₕᵣ is the hydraulic pressure required for operating the clutch/lock-up means 18;
» is the friction between the clutch plates;
A is the surface of the clutch plate;
n indicates the number of plates; and
R indicates the average radius.

The output 82 is connected to a first input 83 of a tenth arithmetic unit 84, which furthermore has a second input 85 and an output 86. The signal on the input 85 represents an additional pressure, which is added to the signal Pₜₕᵣ on the input 83, whereby the eventual sum is made available to the output 86. The output 86 is coupled to the terminal (C) via adjustable damping means 87 (if present) and a converter 88. Said converter 88 converts the desired value of the pressure Pₜₕᵣ into a signal which is suitable for influencing a valve 89 incorporated in the block 18. The converter 88 will generally be provided with a suitably adjustable PID-controller for that purpose. The valve 89 has an ingoing line 90, in which a hydraulic pressure P_{sec} is realised by means of a pump (not shown) and an outgoing line 91, in which a pressure influenced by means of the further electronic control means 17 is realised for a valve 92, which may e.g. be manually controlled. The signal Pₜₕᵣ may also be used for engaging a clutch/torque converter 93. If required the engagement of the clutch/torque converter 93 may be made dependent on the operating mode connected with the "economical", "normal" or "sporting" driving style. With each of said selected driving styles the engagement of the clutch/lock-up of the torque converter 93 can furthermore be made dependent on certain requirements being met by the aforesaid parameters or on a combination of the aforesaid parameters. Said engagement may e.g. be made dependent on certain limits being exceeded, or the reverse, by the parameters or the parameter combinations. Examples of parameters or parameter combinations include: α, dα/dt, i, Nₛ, Nₚ, Nₘ/Nₚ, dNₛ/dt or for example the temperature of e.g. the brakes or the slip torque of the belt. Also the limiting values may be made dependent again on the specific operating mode which is required.

If required the valve 89 may be incorporated in a control loop, in which case the line 89 also must be connected to a converter (not shown), however, which is to be connected to a differentiator (not shown) to be provided between the adjustable damping means 87 and the converter 88.

The previously explained memories in the means 20, 21, 34 and 35 may e.g. be in the shape of a rom, prom, an E-prom or an EE-prom.

The electronically controlled continuously variable transmission explained above may be extended in a simple manner into an even more advanced transmission. Thus it is possible e.g. to supply suitable signals to e.g. the secondary electronic control unit 12, said signals containing a measure for any torque variations caused by the motor or e.g. the road. Such torque variations may namely lead to undesirable slip of the driving belt 7 across the various pulley halves. Said slip may be prevented in that, even before said torque variations reach the transmission, the secondary pressure is influenced, and generally enhanced, in such a manner that such torque variations do not lead to said undesirable slip. It is necessary in that case that the possibility of torque variations occurring is recognized at an early stage. It is possible to anticipate the torque variations caused by the motor when the motor torque field of the motor used is known. This motor torque field is stored in the means 34 and is thus used in the embodiment of Figure 3 to realise a certain adaptation of the secondary pressure, given a certain variation in the position of the throttle and the change of the motor torque connected therewith. When otherwise a distinction is made, with a normal operation of the transmission (i.e. the drive position) between the various operating situations, such as: "low", "medium" or "overdrive", it appears that dependent on the kind of operating situation the sensitivity for motor torque variations varies. It appears that the sensitivity of the transmission for motor torque variations is greatest in the "low" position. The secondary electronic control unit 12 may thus be arranged in such a manner that this fact is taken into account, so that the tension in the driving belt 7 is at all times optimally adapted to the torque to be transmitted. In practice such motor torque variations appear to be well-predictable from the moment the accelerator pedal is depressed. The time that lapses between the moment of acceleration and the moment at which the motor torque is built up generally amounts to a few tens of milliseconds. Another few tens of milliseconds later the torque of the primary shaft 2 is equal to that of the motor.

On the other hand torque variations which originate in the road are unpredictable and therefore some form of indication is required, in order to be able to supply data to the various control means that contain a measure for the torque variations resulting from this. Indicators that are in principle suitable include:
a) the torque occurring in the secondary shaft 8;
b) the torsional rotation of the secondary shaft 8;
c) the angular rotation of the wheels of the vehicle;
d) the vertical (springing) movement of the wheels;
e) the vertical bearing forces occurring in the wheel bearings in question.

The above indicators are in principle usable, but they provide measuring magnitudes which occur substantially simultaneously with the occurring torque variations. Measuring magnitudes which on the other hand anticipate torque variations in the transmission include:
a) the deformation of the tyres, which may e.g. be determined by means of strain gauges detecting the deformation of the rubber of the tyres so as to detect unevennesses in the road surface.
b) the air pressure in the tyres;
c) the horizontal bearing forces in the wheels;
d) the reaction forces in the various supporting arms and reaction rods.

Information that anticipates even further is provided by measuring the unevenness of the road surface by means of e.g. microwaves or laser-doppler sensors. Said sensors are blank contact transducers, which are already used with so-called active suspension systems. Since the information provided by said sensors anticipates so far ahead, ample computing time and control time is available so as to have the secondary pressure adjusted at the correct moment. It appears that even at a speed of 100 km/h a period of about 18 milliseconds is still available. Sensor means 94 of the type explained above are schematically indicated in Figure 3. In the illustrated embodiment of the secondary electronic control unit 12 said sensor means 94 are connected to a third input 95 of the seventh arithmetic unit 60, so as to influence the secondary pressure additionally by means of the signal on the third input. Thus a computation may be made in the sensor means 94, on the basis of the momentaneously available data as to possibly occurring torque variations. Said torque variations might lead to impermissible slip, on the basis of which it may be decided to influence the secondary pressure momentaneously, in order to reduce said possibly impermissible slip.

The electro-mechanical means explained above with reference to Figures 2, 3 and 4, viz. the primary moving means 29, the secondary moving means 74 and the valve 89 may, as already said before, be of electromechanical design. A preferred embodiment of such electromechanical means provided with reference numeral 96 is illustrated in Figure 5. The means 96 illustrated in this embodiment comprise a valve body 97, which is axially movable within a space 98 under the influence of a movable core 100 accommodated in a coil 99. The valve body 97 bears against a spring 101, whose bias can be set by means of an adjusting screw 102. The construction of the valve body 97 is such that said valve body narrows in the space 98, from an effective surface A1 to an effective surface A2, which is smaller than A1. Lines 103 and 104 terminate in the space 98, whose passages may be controlled by moving the valve body 97. A pump (not shown) may e.g. be connected to the line 103, whereby the line 104 can be used as a blow-off for the fluid to be delivered by the pump. By driving the coil 99 it is possible to influence the axial position, and thus the passage, so that in that case a pressure is effected in the line 103 which is dependent on the current through the coil 99. If a fluid pressure is present in the space 98 a net force against the spring force of the spring 101 will co-operate with the force exerted by the coil 99, and a required position of the valve body 97 will be adjusted on the basis of this equilibrium of forces. The net force produced by the hydraulic pressure in the space 98 works against the spring pressure, since the effective surface A1 is larger than the effective surface A2. Thus the hydraulic pressure in the space 98 is used to support the action of the coil 99. The electro-mechanical means 96 thus work directly, i.e. they function as a direct converter of the electric current I into a required hydraulic pressure. The use of a pilot valve or an auxiliary valve, as was usual, has become redundant as a result of this direct control method.

The electromechanical means 96 will be incorporated in a control loop, in order to reduce their sensitivity to the effect that the pressure in the space 98 has on control behaviour of said means, a converter 105 connected to the line 103 for converting the hydraulic pressure in the line 103 into a corresponding electric signal P(MV) being present in said control loop. Said control loop furthermore contains a differential amplifier 106 having two inputs, viz. P(MV) and P(DV), and one output 107, to which the coil 99 is connected. As long as the differential amplifier detects a differential signal between the measured value P(MV) and the required value P(DV), said amplifier will effect a current through the coil 99 so as to move the valve body 97, until an equilibrium has been adjusted and both signal are equal to each other.

A very important advantage from a point of view of safety is that, in the unlikely event of a power failure, the electro-mechanical means automatically assume a position, under the influence of the spring, in which a safe high pressure is set. In that case the transmission keeps functioning in spite of the power failure.

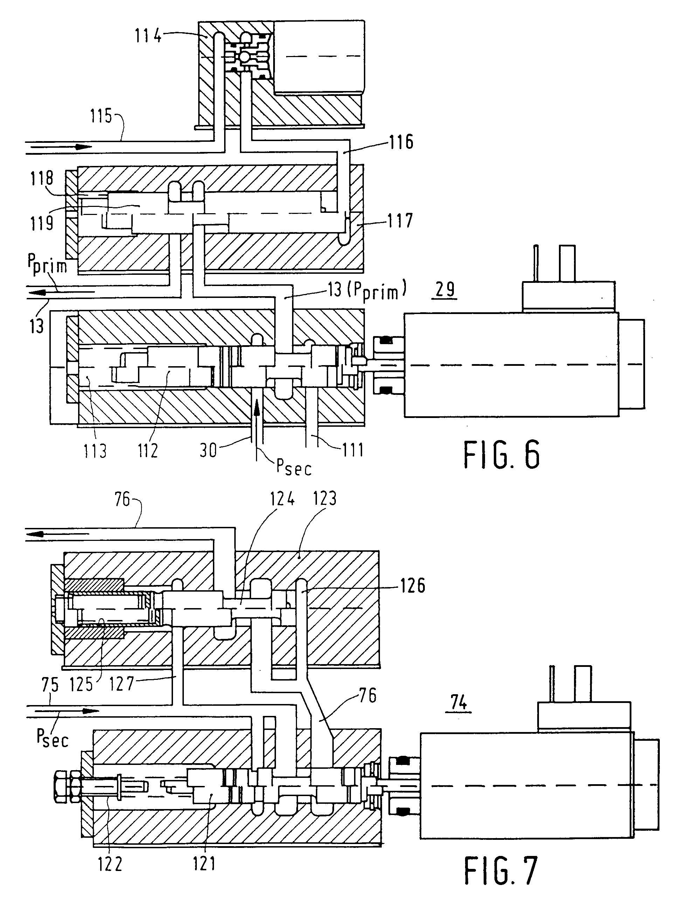

If such a high pressure is undesirable for a prolonged time, e.g. because it might result in damage to the transmission, the electro-mechanical means may be designed such that in the event of a power failure a constant lower pressure is set. Besides the electro-mechanical means also additional control means may be provided which, only in the event of a power failure, set the high or low pressure adjusted by the electro-mechanical means to a required pressure level. Two possible embodiments are illustrated in Figures 6 and 7.

Figure 6 shows a primary electronic control unit 6 which, insofar as it corresponds with Figure 2, has been given the same numerals. The primary moving means 29 are again in the shape of hydraulic moving means and have an ingoing line 30 with a P_{sec} and an outgoing line 13 with the set pressure Pₚᵣᵢₘ. Hydraulic medium can be discharged via an outgoing line 111. In the event of a power failure the valve body 112 will move to the right under the influence of the spring 113, as a result of which the ingoing line 30 is no longer in contact with the ingoing line 13. There is a connection between the line 13 and the line 111, so that hydraulic medium will flow from the line 13 via the line 111. As a result of this Pₚᵣᵢₘ in the line 13 would quickly become lower in the event of a power failure, as a result of which the transmission would change down very quickly and the rpm would run up very fast. This is undesirable and is preferably avoided. For this purpose the control according to Figure 6 is furthermore provided with an on/off solenoid 114 and a safety valve 117. The safety valve 117 is placed in the line 13 of Pₚᵣᵢₘ. The on/off solenoid 114 is provided with an ingoing line 115 and an outgoing line 116, which is coupled to the safety valve 117. In the event of a power failure the on/off solenoid 114 closes the connection between the lines 115 and 116, as a result of which the control signal in the line 116 to the safety valve is blacked out. Under the influence of the spring 118 the valve body 119 of the safety valve 117 will move to the right, so that the line 13 of Pₚᵣᵢₘ is closed. As a result Pₚᵣᵢₘ cannot become lower in the event of a power failure, except for a slight leakage in the control system, which is common. As a result of said leakage Pₚᵣᵢₘ will decrease only slowly, the transmission will change down gradually and thus the engine rpm will also run up slowly. The driver will notice this and will have sufficient time to decelerate. Thus a safe primary electronic control is obtained, also in the event of a power failure.

Figure 7 shows a secondary electronic control unit which, insofar as it corresponds with Figure 2, has been given the same numerals. The moving means 74 are provided with an ingoing line 75, which is again coupled to a pump (not shown) and an outgoing line 76. In this case the moving means 74 are designed such, however, that in the event of a power failure the connection between the ingoing line 75 (P_{sec}) and the outgoing line becomes maximal, because in the event of a power failure the valve body 121 is completely pushed to the right in Figure 7 under the influence of the spring 122. In this case P_{sec} is set to a safe pressure in the line 75, as a result of the large discharge of medium via the line 76. Said P_{sec} cannot be optimal, however, e.g. to drive the transmission and thus the vehicle. In order to make it possible for the transmission to be driven even in the event of a power failure a hydraulic auxiliary valve 123 is provided in the discharge line 76. Said auxiliary valve 123 has a valve body 124 and a spring 125. Furthermore the pressure of the discharge line 76 acts on the valve 124 at 126. Said pressure of the discharge line 76 at 126 acts against the spring 125. On the other hand the spring 125 is supported again at 127 by the pressure P_{sec} in the line 75.

With normal use P_{sec} at 127 will always be larger than the pressure in the discharge line 76 at 126 so that, also under the influence of the spring 125, the valve body 124 is mainly directed towards the right in Figure 7, so that the valve body 124 will at all times allow a certain flow of hydraulic medium through the line 76. In the event of a power failure the pressure in the line 76, and at 126, will increase, as a result of which the valve 124 will move to the left in Figure 7, thus further controlling the flow in the line 76 and thus also P_{sec} in the line 75. Thus the auxiliary valve 123 has taken over the control of P_{sec} in the event of a power failure, and sets it to such a low value that the tranmission and the vehicle can be driven, but that the transmission is not loaded by high pressure, which might lead to damage.

It will be apparent that within the framework of the invention several other embodiments for electro-mechanical means are conceivable. Thus the electro-mechanical means may be provided with several supply and/or discharge lines, as well as with control edges. Furthermore the valve body 97 itself may also serve as a core for the coil 99.

With the electro-mechanical means, in particular those wherein the valve body is directly connected to the core of the coil or wherein the valve body itself functions as a core, instability of hysteresis may occur when the coil is driven with a certain current. According to the invention this can be largely prevented, however, by providing a dither frequency on the current.

In the event of large changes in the required control current, e.g. by braking of the vehicle, the control may furthermore be self-learning, in such a manner that the driving current, without control steps, is directly taken to the required value, after which the control takes over the current adjustment.

## Claims

1. An electronically controlled continuously variable transmission (1) provided with a driving belt (7), which is disposed between a primary pulley provided on a primary shaft (2) and a secondary pulley (9, 10) provided on a secondary shaft (8), whereby each pulley has corresponding conical pulley halves (3, 4 and 9, 10) and at least one of said corresponding pulley halves is axially movable by means of primary and secondary moving means (29 and 74) connected to a primary pulley half and a secondary pulley half respectively, which continously variable transmission comprises an electronic control unit (6) to adjust the transmission ratio,
characterized in the provision of a further electronic control unit (12) to control the tension in the driving belt (7), whereby the primary moving means (29) are coupled to said electronic control unit (6) and said secondary moving means (74) are coupled to said further electronic control unit (12) and whereby said electronic control units (6 and 12) are separate from one another.

2. A transmission according to claim 1, characterized in that the primary electronic control unit (6) comprises selection means (20, 21), in which mutually different data are stored in memories, said data relating to a certain optimum selection with regard to the operating mode of the transmission.

3. A transmission according to claim 2, characterized in that a signal is supplied to an input of the first selection means (20), which signal contains a measure for the position (α) of an accelerator pedal of an engine coupled to the transmission, and that on the basis of the type of engine an optimum selection for the momentaneously desired value of the rotational speed of the primary shaft (2) is made from data stored in the memory, said data comprising the motor torque values associated with the relevant position of the accelerator pedal versus the values (Nₚ) of the corresponding rotational speed of the primary shaft, and that said selection is supplied to an output coupled to the primary moving means (29), so as to influence the transmission ratio.

4. A transmission according to claim 2 or 3, characterized in that a signal is supplied to an input of the second selection means (21), which signal contains a measure for the position (α) of an accelerator pedal of an engine coupled to the transmission, whereby on the basis of the signal and on the basis of a signal supplied to an input of the second selection means (21), which signal contains a measure for the rotational speed (Nₛ) of the secondary shaft (8), an optimum selection for the momentaneously desired value of the rotational speed of the primary shaft (2) is made from data stored in a memory of the second selection means (21), said data comprising a desired connection between the values of the rotational speed of the secondary shaft (8) and the rotational speed of the primary shaft (2), and that said selection is supplied to an output coupled to the primary moving means (29), so as to influence the transmission ratio.

5. A transmission according to claim 3 or 4, characterized in that the transmission is provided with adjustable damping means (22, 23), which are connected between the output of the first or the second selection means (20, 21) and the primary moving means (29).

6. A transmission according to any one of the claims 3 - 5, characterized in that on the basis of the required value of the rotational speed of the primary shaft (2) the actual throttle setting is selected from data stored in the memory of the respective selection means (20, 21), which data comprise the connection between the values of the rotational speed (Nₚ) of the primary shaft (2) and the corresponding possible settings (β) of the engine throttle (16), which actual throttle setting is to be supplied to throttle adjusting means coupled to the selection means (20, 21).

7. A transmission according to claim 6, characterized in that the transmission is provided with adjustable damping means (32, 33), which are connected between the output of the first or the second selection means (20, 21) and the throttle adjusting means.

8. A transmission according to any one of the claims 1 - 7, characterized in that the secondary electronic control unit (12) contains memory means (34), in which data are stored which comprise values, associated with the motor torque values, of the rotational speed of the engine in dependence on the settings of the engine throttle (16), that the control unit (12) has two inputs for supplying a signal containing a measure for the actual position (β) of the throttle (16) to the first input and for supplying a signal (Nₘ) containing a measure for the actual rotational speed to the second input, as well as processing means (34) connected to the memory means (34) for delivering a further signal containing a measure for the torque produced by the engine to the output of the processing means (34), and that the output of the processing means (34) is coupled to the secondary moving means (74) for controlling the tension in the driving belt on the basis of the further signal.

9. A transmission according to claim 8, characterized in that the secondary control unit (12) contains first correction means (35) provided with two inputs (36, 39) and one output and a first arithmetic unit (38) provided with two inputs (40, 41) and one output (37), whereby the first input (40) of the arithmetic unit (38) is connected to the second input of the secondary control unit (12), the second input (41) of the arithmetic unit (38) is connected to a terminal (Nₚ), to which a signal is to be supplied which contains a measure for the value of the torque (Nₚ) of the primary shaft (2) and whereby at the output (37) of the arithmetic unit (38) connected to the second input (39) of the first correction means (35) a signal is generated, which contains a measure for the quotient of (Nₚ) and (Nₘ), whereby the first input (36) of the first correction means (35) is connected to the output of the processing means (34), and whereby the output of the first correction means (35) is coupled to the secondary moving means (74).

10. A transmission according to claim 8 or 9, characterized in that the secondary control unit (12) contains a second (42) and a third (46) arithmetic unit, each unit being provided with two inputs and one output, whereby the first input (43) of the second arithmetic unit (42) is connected to a terminal (Nₚ), to which a signal is to be supplied which contains a measure for the value of the rotational speed (Nₚ) of the primary shaft (2), and whereby the second input (44) of the second arithmetic unit (42) is connected to a terminal (Nₛ), to which a signal is to be supplied which contains a measure for the value of the rotational speed (Nₛ) of the secondary shaft (8), and a signal is generated, at the output (45) of the second arithmetic unit (42) connected to the second input (48) of the third arithmetic unit (46), which contains a measure for the transmission ratio (i), whereby the first input (47) of the third arithmetic unit (46) is coupled to the output of the first correction means (35), and whereby the output (53) of the third arithmetic unit (46) is coupled to the secondary moving means (74).

11. A transmission according to claim 10, characterized in that the secondary control unit (12) contains a fourth arithmetic unit (49) having one input (50) and one output (51), and a fifth arithmetic unit (52) having two inputs (54, 55) and one output (56), whereby the input (50) of the fourth arithmetic unit (49) is connected to the output (45) of the second arithmetic unit (42), so as to generate a signal at the output (51) of the fourth arithmetic unit (49) which contains a measure for the secondary radius (Rₛ) of the driving belt (7), which is movable between the secondary pulley halves, whereby the output (51) of the fourth arithmetic unit (49) is connected to the second input (55) of the fifth arithmetic unit (52) and the first input (54) of the fifth arithmetic unit (52) is connected to the output (53) of the third arithmetic unit (46), and whereby the output (56) of the fifth arithmetic unit (52) is coupled to the secondary moving means (74).

12. A transmission according to claim 10 or 11, characterized in that the secondary control unit (12) contains a sixth arithmetic unit (57) having one input (58) and one output (59) and a seventh arithmetic unit (60) having two inputs (61, 62) and one output (63), whereby the input (58) of the sixth arithmetic unit (57) is connected to the terminal (Nₛ), the output (59) of the sixth arithmetic unit (57) is connected to the second input (62) of the seventh arithmetic unit (60) and the first input (61) of the seventh arithmetic unit (60) is coupled to the output (53) of the third arithmetic unit (46), so as to reduce, with higher rotational speeds of the secondary shaft (8), the measure in the output signal (63) of the seventh arithmetic unit (60) which controls the tension force in the driving belt (7).

13. A transmission according to any one of the claims 8 - 12, characterized in that the secondary electronic control unit (12) contains at least one limiter, which is connected between the output of the processing means (34) and the secondary moving means (74).

14. A transmission according to any one of the claims 8 - 13, characterized in hat the transmission contains an eighth arithmetic unit (64) coupled to the output of the processing means (34), said arithmetic unit having an input (65) and an output (67), said transmission also containing clutch means (18) coupled to the secondary shaft (8), which at the command of a switch signal on a command input (C) engage or disengage, that the input (65) of the eighth arithmetic unit (64) is coupled to the output (T) of the processing means (34) and that the command input (C) of the clutch means (18) is coupled to the output (67) of the eighth arithmetic unit (64).

15. A transmission according to claim 14, characterized in that the transmission contains a limiter connected between the output (67) of the eighth arithmetic unit (64) and the input of the clutch means (18).

16. A transmission according to any one of the preceding claims, characterized in that the secondary electronic control unit (12) contains sensor means coupled to the secondary moving means (74), so as to generate a signal containing a measure for undesirable torque variations which, emanating from the road surface or the engine, will reach the transmission, and that the secondary electronic control unit (12) is arranged in such a manner that before the torque variations reach the transmission the tension in the driving belt (7) has been adjusted accordingly.

17. Electro-mechanical means (96) used in the transmission according to any one of the preceding claims, characterized in that said means (96) contain an axially moveable valve body (97), and a coil (99) having a movable core (100) which is connected to the valve body (97), whereby the position of the valve body (97) is influenced by driving the coil (99), so as to set one or more pressure levels.

18. Electro-mechanical means (96) according to claim 17, characterized in that the valve body (97) also functions as a core and is partially located within the coil for that purpose.

19. Electro-mechanical means (96) according to claim 17 or 18, characterized in that the valve body (97) has at least one surface (A1) in a space (98) to be filled with hydraulic fluid, so as to exert a hydraulic force on the valve body (97), which force, combined with the force produced by driving the coil (99), is utilized for influencing the position of the valve body (97) so as to set one or more pressure levels.

20. Electro-mechanical means (96) according to any one of the claims 17 - 19, characterized in that said means (96) have a spring (101) coupled to the valve body (97), which pushes the valve body (97) in the direction of the position in which the highest pressure is set.

21. Electro-mechanical means (96) according to any one of the claims 17 - 19, characterized in that the coil (99) provides a dither frequency on the current, so as to stabilize the electro-mechanical means (96).

22. A transmission according to any one of the preceding claims, characterized in that the transmission is provided with additional control means (17), which in the event of a power failure influence the pressure set by the electro-mechanical means (96).

23. A transmission according claim 22, characterized in that the additional control means comprise a first safety valve (117), which in the event of a power failure sets the pressure set by the electro-mechanical means (96) in order to influence the transmission ratio to be changed only gradually, so as to prevent abrupt changes in the transmission ratio.

24. A transmission according to claim 22, characterized in that the additional control means comprise a second safety valve (123), which in the event of a power failure sets the pressure controlled by the electro-mechanical means (96) in order to influence the tension in the driving belt (7) to a required pressure.

25. A transmission according to any one of the claims 22 - 24, characterized in that said additional control means also comprise an on/off solenoid (114).

## Patentansprüche

1. Elektronisch gesteuertes, kontinuierlich verstellbares Getriebe (1), das mit einem Treibriemen (7) versehen ist, der zwischen einer ersten Riemenscheibe, die auf einem ersten Schaft (2) angeordnet ist, und einer zweiten Riemenscheibe (9, 10), die auf einem Zweiten Schaft (8) angeordnet ist, angeordnet ist, wobei jede Riemenscheibe entsprechende konische Riemenscheibenhälften (3, 4 und 9, 10) aufweist und zumindest eine der entsprechenden Riemenscheibenhälften in axialer Richtung mittels eines ersten und zweiten Bewegungsglieds (29 und 74) verschiebbar ist, das mit einer entsprechenden ersten Riemenscheibenhälfte und einer zweiten Riemenscheibenhälfte verbunden ist, wobei das kontinuierlich verstellbare Getriebe eine elektronische Steuereinheit (6) zum Einstellen des Übertragungsverhältnisses aufweist, gekennzeichnet durch die Anordnung einer weiteren elektronischen Steuereinheit (12), die die Spannung des Treibriemens (7) steuert, wobei das primäre Bewegungsglied (29) mit der elektronischen Steuereinheit (6) verbunden und das zweite Bewegungsglied (74) mit der weiteren elektronischen Steuereinheit (12) verbunden ist, und wobei die elektronischen Steuereinheiten (6 und 12) voneinander getrennt sind.

2. Getriebe nach Anspruch 1, dadurch gekennzeichnet, daß die primäre elektronische Steuereinheit (6) Auswahlmittel (20, 21) umfaßt, in denen wechselseitig verschiedene Daten in Speichern gespeichert sind, wobei die Daten sich auf eine bestimmte Optimalauswahl hinsichtlich des Betriebszustandes des Getriebes beziehen.

3. Getriebe nach Anspruch 2, dadurch gekennzeichnet, daß ein Signal auf einen Eingang des ersten Auswahlmittels (20) gegeben wird, wobei das Signal ein Maß für die Position (α) eines Gaspedals einer mit dem Getriebe verbundenen Maschine enthält, und daß auf der Basis des Maschinentyps eine Optimalauswahl für den momentan gewünschten Wert der Drehgeschwindigkeit des Primärschaftes (2) aus den in dem Speicher gespeicherten Daten durchgeführt wird, wobei die Daten Motordrehmomentwerte enthalten, die mit der relevanten Position des Gaspedals als Funktion der Werte (Nₚ) der entsprechenden Drehgeschwindigkeit des Primärschaftes verbunden sind, und daß diese Auswahl auf einen mit den primären Bewegungsmitteln (29) verbundenen Ausgang gegeben wird, um so das Übersetzungsverhältnis zu beeinflussen.

4. Getriebe nach Anspruch 2 oder 3, dadurch gekennzeichnet, daß ein Signal auf einen Eingang des zweiten Auswahlmittels (21) gegeben wird, wobei das Signal ein Maß für die Position (α) eines Gaspedals einer mit dem Getriebe verbundenen Maschine enthält, wobei auf der Basis eines Signals und auf der Basis des auf einen Eingang des zweiten Auswahlmittels (21) gegebenen Signals, wobei das Signal ein Maß für die Drehgeschwindigkeit (Nₛ) des zweiten Schaftes (8) enthält, eine Optimalauswahl für den momentan gewünschten Wert der Drehgeschwindigkeit des primären Schaftes (2) aus den in einem Speicher des zweiten Auswahlmittels (21) gespeicherten Daten durchgeführt wird, wobei die Daten eine gewünschte Verbindung zwischen den Werten der Drehgeschwindigkeit des zweiten Schaftes (8) und der Drehgeschwindigkeit des ersten Schaftes (2) enthalten, und daß diese Auswahl einem mit dem primären Bewegungsmittel (29) verbundenen Ausgang zugeführt wird, um so das Übersetzungsverhältnis zu beeinflussen.

5. Getriebe nach Anspruch 3 oder 4, dadurch gekennzeichnet, daß das Getriebe mit justierbaren Dämpfungsmitteln (22, 23) versehen ist, die zwischen dem Ausgang des ersten oder des zweiten Auswahlmittels (20, 21) und dem primären Bewegungsmittel (29) angeordnet sind.

6. Getriebe nach einem der Ansprüche 3 bis 5, dadurch gekennzeichnet, daß auf der Basis des benötigten Wertes der Drehgeschwindigkeit des primären Schaftes (2) die gegenwärtige Drosselklappeneinstellung aus den in dem Speicher des entsprechenden Auswahlmittels (20, 21) gespeicherten Daten ausgewählt wird, wobei die Daten die Verbindung zwischen den Werten der Drehgeschwindigkeit (Nₚ) des primären Schaftes (2) und den entsprechenden möglichen Einstellungen (β) der Maschinendrosselklappe (16) enthalten, wobei die gegenwärtige Drosselklappeneinstellung dem Drosselklappenjustiermittel zugeführt wird, die mit dem Auswahlmittel (20, 21) verbunden ist.

7. Getriebe nach Anspruch 6, dadurch gekennzeichnet, daß das Getriebe mit justierbaren Dämpfungsmitteln (32, 33) versehen ist, die zwischen dem Ausgang des ersten oder des zweiten Auswahlmittels (20, 21) und dem Drosselklappenjustiermittel angeordnet sind.

8. Getriebe nach einem der Ansprüche 1 bis 7, dadurch gekennzeichnet, daß die sekundäre Elektroniksteuereinheit (12) ein Speichermittel umfaßt (34), in dem Daten gespeichert sind, die mit den Motordrehmomentwerten verbundene Werte der Drehgeschwindigkeit der Maschine in Abhängigkeit von den Einstellungen der Maschinendrosselklappe (16) aufweisen, daß die Steuereinheit (12) sowohl zwei Eingänge zum Zuführen eines Signals, das ein Maß für die gegenwärtige Position (β) der Drosselklappe (16) enthält, an den ersten Eingang und zum Liefern eines Signals (Nₘ), das ein Maß für die gegenwärtige Drehgeschwindigkeit enthält, an den zweiten Eingang, als auch ein mit dem Speichermittel (34) verbundenes Verarbeitungsmittel (34) zum Zuführen eines weiteren Signals, das ein Maß für das von der Maschine erzeugte Drehmoment enthält, an den Ausgang des Verarbeitungsmittels (34) aufweist, und daß der Ausgang des Verarbeitungsmittels (34) mit dem sekundären Bewegungsmittel (74) zum Steuern der Spannung des Treibriemens auf der Basis eines weiteren Signals verbunden ist.

9. Getriebe nach Anspruch 8, dadurch gekennzeichnet, daß die zweite Steuereinheit (12) ein erstes Korrekturmittel (35), das mit zwei Eingängen (36, 39) und einem Ausgang versehen ist, und eine erste arithmetische Einheit (39) aufweist, die mit zwei Eingängen (40, 41) und einem Ausgang (37) versehen ist, wobei der erste Eingang (40) der arithmetischen Einheit (38) mit dem zweiten Eingang der zweiten Steuereinheit (12) verbunden ist, der zweite Eingang (41) der arithmetischen Einheit (38) mit einem Anschluß (Nₚ) verbunden ist, auf den ein Signal gegeben wird, das ein Maß für den Wert des Drehmomentes (Nₚ) des primären Schaftes (2) enthält, und wobei an dem Ausgang (37) der arithmetischen Einheit (38), die mit dem zweiten Eingang (39) des ersten Korrekturmittels (35) verbunden ist, ein Signal erzeugt wird, das ein Maß für den Quotient von (Nₚ) und (Nₘ) enthält, wobei der erste Eingang (36) des ersten Korrekturmittels (35) mit dem Ausgang des Verarbeitungsmittels (34) verbunden ist, und wobei der Ausgang des ersten Korrekturmittels (35) mit dem zweiten Bewegungsmittel (74) verbunden ist.

10. Getriebe nach Anspruch 8 oder 9, dadurch gekennzeichnet, daß die zweite Steuereinheit (12) eine zweite (42) und eine dritte (46) Arithmetikeinheit aufweist, wobei jede Einheit mit zwei Eingängen und einem Ausgang versehen ist, wobei der erste Eingang (43) der zweiten Arithmetikeinheit (42) mit einem Anschluß (Nₚ) verbunden ist, auf den ein Signal gelegt wird, das ein Maß für den Wert der Drehgeschwindigkeit (Nₚ) des primären Schaftes (2) enthält, und wobei der zweite Eingang (44) der zweiten Arithmetikeinheit (42) mit einem Anschluß (Nₛ) verbunden ist, auf den ein Signal gelegt wird, das ein Maß für den Wert der Drehgeschwindigkeit (Nₛ) des zweiten Schaftes (8) enthält, und daß ein Signal an dem Ausgang (45) der zweiten Arithmetikeinheit (42) erzeugt wird, die mit dem zweiten Eingang (48) der dritten Arithmetikeinheit (46) verbunden ist, das ein Maß für das Übersetzungsverhältnis (i) enthält, wobei der erste Eingang (47) der dritten Arithmetikeinheit (46) mit dem Ausgang des ersten Korrekturmittels (35) verbunden ist, und wobei der Ausgang (53) der dritten Arithmetikeinheit (46) mit dem zweiten Bewegungsmittel (74) verbunden ist.

11. Getriebe nach Anspruch 10, dadurch gekennzeichnet, daß die zweite Steuereinheit (12) eine vierte Arithmetikeinheit (49), die einen Eingang (50) und einen Ausgang (51) hat, und eine fünfte Arithmetikeinheit (52) aufweist, die zwei Eingänge (54, 55) und einen Ausgang (56) hat, wobei der Eingang (50) der vierten Arithmetikeinheit (49) mit dem Ausgang (45) der zweiten Arithmetikeinheit (42) verbunden ist, um so ein Signal an dem Ausgang (51) der vierten Arithmetikeinheit (49) zu erzeugen, das ein Maß für den Sekundärradius (Rₛ) des Treibriemens (7) enthält, der beweglich zwischen den zweiten Riemenscheibenhälften ist, wobei der Ausgang (51) der vierten Arithmetikeinheit (49) mit dem zweiten Eingang (55) der fünften Arithmetikeinheit (52) verbunden ist, und der erste Eingang (54) der fünften Arithmetikeinheit (52) mit dem Ausgang (53) der dritten Arithmetikeinheit (46) verbunden ist, und wobei der Ausgang (56) der fünften Arithmetikeinheit (52) mit dem zweiten Bewegungsmittel (74) verbunden ist.

12. Getriebe nach Anspruch 10 oder 11, dadurch gekennzeichnet, daß die zweite Steuereinheit (12) eine sechste Arithmetikeinheit (57), die einen Eingang (58) und einen Ausgang (59) hat, und ein siebente Arithmetikeinheit (60), die zwei Eingänge (61, 62) und einen Ausgang (63) hat, aufweist, wobei der Eingang (58) der sechsten Arithmetikeinheit (57) mit dem Anschluß (Nₛ) verbunden ist, der Ausgang (59) der sechsten Arithmetikeinheit (57) mit dem zweiten Eingang (62) der siebten Arithmetikeinheit (60) verbunden ist, und der erste Eingang (61) der siebten Arithmetikeinheit (60) mit dem Ausgang (53) der dritten Arithmetikeinheit (46) gekoppelt ist, um so bei höheren Drehgeschwindigkeiten des sekundären Schaftes (8) das Maß in dem Ausgangssignal (63) der siebten Arithmetikeinheit (60) zu reduzieren, das die Spannkraft des Treibriemens (7) steuert.

13. Getriebe nach einem der Ansprüche 8 bis 12, dadurch gekennzeichnet, daß die sekundäre Elektroniksteuereinheit (12) mindestens einen Begrenzer enthält, der zwischen dem Ausgang des Verarbeitungsmittels (34) und dem zweiten Bewegungsmittel (74) angeordnet ist.

14. Getriebe nach einem der Ansprüche 8 bis 13, dadurch gekennzeichnet, daß das Getriebe eine achte mit dem Ausgang des Verarbeitungsmittels (34) verbundene Arithmetikeinheit (64) enthält, wobei die Arithmetikeinheit einen Eingang (65) und einen Ausgang (67) hat, wobei das Getriebe weiterhin ein Kupplungsmittel (18) enthält, das mit dem sekundären Schaft (8) verbunden ist, welches auf den Befehl eines Schaltersignals auf einen Befehlseingang (C) einkuppelt oder auskuppelt, daß der Eingang (65) der achten Arithmetikeinheit (64) mit dem Ausgang (T) des Verarbeitungsmittels (34) verbunden ist, und daß der Befehlseingang (C) des Kupplungsmittels (18) mit dem Ausgang (67) der achten Arithmetikeinheit (64) verbunden ist.

15. Getriebe nach Anspruch 14, dadurch gekennzeichnet, daß das Getriebe einen zwischen dem Ausgang (67) der achten Arithmetikeinheit (64) und dem Eingang des Kupplungsmittels (18) angeordneten Begrenzer enthält.

16. Getriebe nach einem der vorangegangenen Ansprüche, dadurch gekennzeichnet, daß die sekundäre elektronische Steuereinheit (12) ein mit dem sekundären Bewegungsmittel (74) verbundenes Sensormittel aufweist, um so ein Signal zu erzeugen, das ein Maß für unerwünschte Drehmomentschwankungen enthält, die von der Straßenoberfläche oder der Maschine herrührend das Getriebe erreichen werden, und daß die sekundäre elektronische Steuereinheit (12) in einer derartigen Weise ausgelegt ist, daß, bevor die Drehmomentschwankungen das Getriebe erreichen, die Spannung in dem Treibriemen (7) entsprechend justiert worden ist.

17. Elektromechanisches Mittel (96) zur Verwendung in dem Getriebe gemäß einem der vorangegangenen Ansprüche, dadurch gekennzeichnet, daß das Mittel (96) einen in axialer Richtung beweglichen Ventilkörper (97) und eine Spule (99) mit einem beweglichen Kern (100) enthält, der mit dem Ventilkörper (97) verbunden ist, wobei die Position des Ventilkörpers (97) durch das Treiben der Spule (99) beeinflußt wird, um so einen oder mehrere Druckpegel einzustellen.

18. Elektromechanisches Mittel (96) nach Anspruch 17, dadurch gekennzeichnet, daß der Ventilkörper (97) ebenfalls als ein Kern wirkt und zu diesem Zweck teilweise innerhalb der Spule angeordnet ist.

19. Elektromechanisches Mittel (96) nach Anspruch 17 oder 18, dadurch gekennzeichnet, daß der Ventilkörper (97) mindestens eine Oberfläche (A1) in einem Raum (98) aufweist, der mit einer Hydraulikflüssigkeit gefüllt wird, um so eine hydraulische Kraft auf den Ventilkörper (97) auszuüben, wobei die Kraft zusammen mit der durch das Treiben der Spule (99) erzeugten Kraft zum Beeinflussen der Position des Ventilkörpers (97) verwendet wird, um so einen oder mehrere Druckpegel einzustellen.

20. Elektromechanisches Mittel (96) nach einem der Ansprüche 17 bis 19, dadurch gekennzeichnet, daß das Mittel (96) eine mit dem Ventilkörper (97) verbundene Feder (101) hat, die den Ventilkörper (97) in die Richtung der Position drückt, in der der höchste Druck eingestellt wird.

21. Elektromechanisches Mittel (96) nach einem der Ansprüche 17 bis 19, dadurch gekennzeichnet, daß die Spule (99) eine Schwankungsfrequenz auf dem Strom bildet, um so das elektro-mechanische Mittel (96) zu stabilisieren.

22. Getriebe nach einem der vorangegangenen Ansprüche, dadurch gekennzeichnet, daß das Getriebe mit einem zusätzlichen Steuermittel (17) versehen ist, das in dem Fall eines Stromausfalls den von dem elektromechanischen Mittel (96) eingestellten Druck beeinflußt.

23. Getriebe nach Anspruch 22, dadurch gekennzeichnet, daß das zusätzliche Steuermittel ein erstes Sicherheitsventil (117) aufweist, das in dem Fall eines Stromausfalls den von dem elektromechanischen Mittel (96) eingestellten Druck einstellt, um das Übersetzungsverhältnis so zu beeinflussen, daß es nur graduell verändert wird, um so abrupte Änderungen in dem Übersetzungsverhältnis zu verhindern.

24. Getriebe nach Anspruch 22, dadurch gekennzeichnet, daß das zusätzliche Steuermittel ein zweites Sicherheitsventil (123) aufweist, das in dem Fall eines Stromausfalls den von dem elektromechanischen Mittel (96) gesteuerten Druck einstellt, um die Spannung des Treibriemens (7) auf einen benötigen Druck einzustellen.

25. Getriebe nach einem der Ansprüche 22 bis 24, dadurch gekennzeichnet, daß das zusätzliche Steuermittel weiterhin einen An-/Aus-Solenoiden (114) aufweist.

## Revendications

1. Variateur en continu commandé électroniquement (1), muni d'une courroie d'entraînement (7) disposée entre une poulie primaire montée sur un arbre primaire (2) et une poulie secondaire (9, 10) montée sur un arbre secondaire (8), chaque poulie présentant des moitiés de poulie conique correspondantes (3, 4 et 9, 10) et au moins l'une de ces moitiés de poulie correspondantes étant mobile axialement à l'aide de moyens de déplacement primaire et secondaire (29 et 74) raccordés respectivement à une moitié de poulie primaire et à une moitié de poulie secondaire, lequel variateur en continu comprend une unité de commande électronique (6) pour régler le rapport de transmission, caractérisé en ce qu'il est prévu une unité de commande électronique supplémentaire (12) pour commander la tension dans la courroie d'entraînement (7), les moyens de déplacement primaire (29) étant accouplés à l'unité de commande électronique (6) et les moyens de déplacement secondaire (74) étant accouplés à l'unité de commande électronique supplémentaire (12) et les unités de commande électronique (6 et 12) étant séparées l'une de l'autre.

2. Variateur selon la revendication 1, caractérisé en ce que l'unité de commande électronique primaire (6) comprend des sélecteurs (20, 21) dans lesquels sont mémorisées des données réciproquement différentes entre elles, ces données concernant une certaine sélection optimum par rapport au mode de fonctionnement du variateur.

3. Variateur selon la revendication 2, caractérisé en ce qu'un signal est amené à une entrée du premier sélecteur (20), lequel signal contient une mesure de la position (α) d'une pédale d'accélérateur d'un moteur accouplé au variateur et en ce qu'en fonction du type de moteur une sélection optimum pour la valeur momentanément souhaitée de la vitesse de rotation de l'arbre primaire (2) est effectué à partir des données stockées dans la mémoire, les données comprenant les voleurs du moment de couple associées à le position appropriée de la pédale d'accélérateur par rapport eux valeurs (Nₚ) de la vitesse de rotation correspondante de l'arbre primaire et en ce que la sélection est transmise à une sortie accouplée eux moyens de déplacement primaire (29) de façon à agir sur le rapport de variation.

4. Variateur selon la revendication 2 ou 3, caractérisé en ce qu'un signal est amené à une entrée du second sélecteur (21), lequel signal contient une mesure de la position (α) d'une pédale d'accélérateur d'un moteur accouplé au variateur, ce en quoi sur la base de ce signal ainsi que d'un signal fourni à une entrée du second sélecteur (21), signal qui contient une mesure pour la vitesse de rotation (Nₛ) de l'arbre secondaire (8), il est procédé à une sélection optimum pour la valeur momentanément souhaitée de la vitesse de rotation de l'arbre primaire (2) à partir des données stockées dans une mémoire du second sélecteur (21), ces données comprenant une liaison souhaitée entre les valeurs de la vitesse de rotation de l'arbre secondaire (6) et la vitesse de rotation dc l'arbre primaire (2) et en ce que la sélection est amenée à une sortie accouplée aux moyens de déplacement primaire (29) de façon à agir sur le rapport de variation.

5. Variateur selon la revendication 3 ou 4, caractérisé en ce que la transmission est dotée de moyens d'amortissement réglables (22, 23) qui sont connectés entre le sortie des premier ou second sélecteurs (20, 21) et les moyens de déplacement primaire (29).

6. Variateur selon l'une quelconque des revendications 3 - 5, caractérisé en ce qu'en fonction de la valeur requise de la vitesse de rotation de l'arbre primaire (2), le réglage réel de la vanne papillon est choisi à partir des données stockées dans la mémoire du sélecteur respectif (20, 21), lesquelles données comprennent la liaison entre les voleurs de la vitesse de rotation (Nₚ) de l'arbre primaire (2) et les réglages éventuels correspondants (β) de la vanne papillon (16) du moteur, lequel réglage réel de la vanne papillon doit être amené aux moyens de réglage de la vanne papillon accouplés au sélecteur (20, 21).

7. Variateur selon la revendication 6, caractérisé en ce qu'il est muni de moyens d'amortissement réglables (32, 33) qui sont montés entre la sortie des premier et second sélecteurs (20, 21) et les moyens de réglage de la vanne papillon.

8. Variateur selon l'une quelconque des revendications 1 à 7, caractérisé en ce que l'unité de commande électronique secondaire (12) contient une mémoire (34) dans laquelle sont stockées des données qui comprennent les valeurs liées aux valeurs du moment de couple, de la vitesse de rotation du moteur en fonction des réglages de la vanne papillon du moteur (16) et en ce que l'unité de commande (12) comporte deux entrées pour fournir un signal contenant une mesure de la position réelle (β) de la vanne papillon (16) à la première entrée et pour fournir un signal (Nₘ) contenant une mesure de la vitesse de rotation réelle à la seconde entrée, ainsi que des moyens de traitement (34) raccordés à la mémoire (34) pour fournir un signal supplémentaire contenant une mesure du moment de couple produit par le moteur à la sortie des moyens de traitement (34) et en ce que la sortie des moyens de traitement (34) est accouplée aux moyens de déplacement secondaire (74) pour la commande de la tension de la courroie d'entraînement en fonction du signal ultérieur.

9. Variateur selon la revendication 8, caractérisé en ce que l'unité de commande secondaire (12) contient des premiers moyens de correction (35) munis de deux entrées (36, 39) et une sortie et une première unité arithmétique (38) munie de deux entrées (40, 41) et d'une sortie (37), la première entrée (40) de l'unité arithmétique (38) étant connectée à la seconde entrée de l'unité de commande secondaire (12), la seconde entrée (41) de l'unité arithmétique (38) étant connectée à une borne (Nₚ) à laquelle doit être amené un signal qui contient une mesure pour la valeur du moment de couple (Nₚ) de l'arbre primaire (2) et à la sortie de l'unité arithmétique (38) raccordée à la seconde entrée (39) des premiers moyens de correction (35) un signal étant produit qui contient une mesure pour le quotient de (Nₚ) et (Nₘ), lu première entrée (36) des premiers moyens de correction (35) étant connectée à la sortie du moyen de traitement (34) et la sortie des premiers moyens de correction (35) étant accouplée aux moyens de déplacement secondaire (74).

10. Variateur selon la revendication 8 ou 9, caractérisé en ce que l'unité de commande secondaire (12) contient une seconde (42) et une troisième (41) unités arithmétiques, chaque unité étant munie de deux entrées et d'une sortie, la première entrée (43) de la seconde unité arithmétique (42) étant raccordée à une borne (Nₚ) sur laquelle le signal doit être amené et contenant une mesure de la valeur de la vitesse de rotation (Nₚ) de l'arbre primaire (2) et la seconde entrée (44) de la seconde unité arithmétique (42) étant connectée à une borne (Nₛ) sur laquelle un signal doit être amené et contenant une mesure de la valeur de la vitesse de rotation (Nₛ) de l'arbre secondaire (8) et un signal étant produit à la sortie (45) de la seconde unité arithmétique (42) raccordée à la seconde entrée (48) de la troisième unité arithmétique (46) contenant une mesure du rapport de variation (i), la première entrée (47) de la troisième unité arithmétique (46) étant accouplée à la sortie des premiers moyens de correction (35) et la sortie (53) de la troisième unité arithmétique (46) étant accouplée aux moyens de déplacement secondaire (74).

11. Variateur selon la revendication 10, caractérisé en ce que la seconde unité de commande (12) contient une quatrième unité arithmétique (49) avec une entrée (50) et une sortie (51) et une cinquième unité arithmétique comportant deux entrées (54, 55) et une sortie (56), l'entrée (50) de la quatrième unité arithmétique (49) étant raccordée à la sortie (45) de la seconde unité arithmétique (42) de façon à produire un signal à la sortie (51) de la quatrième unité arithmétique (49) qui contient une mesure du rayon secondaire (Rₛ) de la courroie d'entraînement (7) qui est mobile entre les moitiés de poulie secondaire, la sortie (51) de la quatrième unité arithmétique (49) étant raccordée à la seconde entrée (55) de la cinquième unité arithmétique (52) et la première entrée (54) de la cinquième unité arithmétique (52) étant raccordée à la sortie (53) de la troisième unité arithmétique (46) et la sortie (56) de la cinquième unité arithmétique (52) étant accouplée aux moyens de déplacement secondaire (74).

12. Variateur selon la revendication 10 ou 11, caractérisé en ce que l'unité de commande secondaire (12) contient une sixième unité arithmétique (57) comportant une entrée (58) et une sortie (59) et une septième unité arithmétique (60) avec doux entrées (61, 62) et une sortie (63), l'entrée (58) de la sixième unité arithmétique (57) étant connectée à la borne (Nₛ), la sortie (59) de la sixième unité arithmétique (57) étant connectée à la seconde entrée de la septième unité arithmétique (60) et la première entrée (61) de la septième unité arithmétique (60) étant accouplée à la sortie (53) de la troisième unité arithmétique (46) de façon à réduire, pour des vitesses de rotation supérieures de l'arbre secondaire (8), la mesure dans le signal de sortie (63) de la septième unité arithmétique (60) qui commande la force de tension de la courroie d'entraînement (7).

13. Variateur selon l'une quelconque des revendications 8 - 12, caractérisé en ce que l'unité de commande électronique secondaire (12) contient au moins un limiteur qui est raccordé entre la sortie des moyens de traitement (34) et des moyens de déplacement secondaire (74).

14. Variateur selon l'une quelconque des revendications 8 - 13, caractérisé en ce que la variateur contient une huitième unité arithmétique (64) accouplée à la sortie des moyens de traitement (34), cette unité arithmétique comportant une entrée (65) et une sortie (67), la variateur contenant également des moyens d'embrayage (18) accouplés à l'arbre secondaire (8), qui à la commande du signal de commutation sur une entrée de commande (C) embrayent ou désembrayent, en ce que l'entrée (65) de la huitième unité arithmétique (64) est accouplée à la sortie (T) des moyens de traitement (34) et en ce que l'entrée de commande (C) des moyens d'embrayage (18) est accouplée à la sortie (67) de le huitième unité arithmétique (64).

15. Variateur selon la revendication 14, caractérisé en ce que la variateur contient un limiteur raccordé entre la sortie (67) de la huitième unité arithmétique (64) et l'entrée des moyens d'embrayage (18).

16. Variateur selon l'une quelconque des revendications précédentes, caractérisé en ce que l'unité de commande électronique secondaire (12) contient des moyens de capteurs accouplés aux moyens de déplacement secondaire (74) de façon à produire un signal contenant une mesure des variations du moment de couple indésirables, lesquelles, dues à l'état de la surface de la route ou du moteur, parviennent au variateur, et on ce que l'unité de commande électronique secondaire (12) est agencée de manière telle qu'avant que les variations du moment de couple ne parviennent eux variateur, la tension de la courroie d'entraînement (7) a été réglée en conséquence.

17. Moyens électromécaniques (96) utilisés dans le variateur selon l'une quelconque des revendications précédentes, caractérisés en ce que ces moyens (96) contiennent un corps de soupape (97) mobile axialement et une bobine (99) avec un noyau mobile (100) qui est raccordé au corps de soupape (97), la position du corps de soupape (97) étant influencée par l'excitation de la bobine (99) de façon à fixer un ou plusieurs niveaux de pression.

18. Moyens électromécaniques (96) selon la revendication 17, caractérisés en ce que le corps de soupape (97) sort également de noyau et en ce que, de ce fait, il est partiellement logé à l'intérieur de la bobine.

19. Moyens électromécaniques (96) selon la revendication 17 ou 18, caractérisés en ce que le corps de soupape (97) comporte au moins une surface (A1) dans un espace (98) devant être rempli de fluide hydraulique de façon à exercer une force hydraulique sur le corps de soupape (97), laquelle force combinée à la force produite par la commande de la bobine (99) sert à influencer la position du corps de soupape (97) de façon à fixer un ou plusieurs niveaux de pression.

20. Moyens électromécaniques (96) selon l'une quelconque des revendications 17 - 19, caractérisés en ce que ces moyens (96) comportent un ressort (101) accouplé au corps de soupape (97) qui déplace le corps de soupape (97) dans la direction de la position où est fixée la pression extrême.

21. Moyens électromécaniques (96) selon l'une quelconque des revendications 17 - 19, caractérisés en ce que la bobine (99) fournit une fréquence de tremblement sur le courant de façon à stabiliser les moyens électromécaniques (96).

22. Variateur selon l'une quelconque des revendications précédentes, caractérisé en ce que le variateur est muni de moyens de commande supplémentaires (17) lesquels en cas de panne de courant agissent sur la pression fixée par les moyens électromécaniques (96).

23. Variateur selon la revendication 22, caractérisé en ce que les moyens de commande supplémentaires comprennent une première soupape de sécurité (117) laquelle, en cas de panne de courant, fixe la pression établie par les moyens électromécaniques (96) afin d'agir sur le rapport de variation à modifier progressivement de façon à empêcher les changements brusques dans le rapport de variation.

24. Variateur selon la revendication 22, caractérisé en ce que des moyens de commande supplémentaires comprennent une seconde soupape de sécurité (123) laquelle en cas de panne de courant fixe la pression commandée par les moyens électromécaniques (96) pour agir sur la tension de la courroie d'entraînement (7) à une pression souhaitée.

25. Variateur selon l'une quelconque des revendications 22 - 24, caractérisé en ce que des moyens de commande supplémentaires comprennent également un solenoïde (114) marche/arrêt.
